# EUROPÄISCHE PATENTSCHRIFT

(11) **EP 1 179 292 B1**
(45) Veröffentlichungstag und Bekanntmachung des Hinweises auf die Patenterteilung: **09.02.2005**
(21) Anmeldenummer: 01118088.2
(22) Anmeldetag: 26.07.2001
(51) Int. Cl.: A01D 41/14, A01D 45/02

(54) **Verfahren und Vorrichtung zum Schwenken der Abteiler von mehrteiligen landwirtschaftlichen Erntemaschinen**
Method and device for pivoting the separator of multi-row harvesting machines
Procédé et dispositif pour pivoter le séparateur de machines de récolte à plusieurs rangs

(30) Priorität: 07.08.2000 DE 10039097
(43) Veröffentlichungstag der Anmeldung: 13.02.2002
(73) Patentinhaber: CLAAS Saulgau GmbH, 88348 Bad Saulgau (DE)
(72) Erfinder: Klotz, Manfred, 88605 Sauldorf-Bietingen (DE); Albinger, Bernd, 88454 Hochdorf-Schweinhausen (DE)

(56) Entgegenhaltungen:
- EP-A- 0 131 853
- EP-A- 0 301 177
- FR-A- 2 252 805
- FR-A- 2 732 855
- US-A- 5 329 753

## Beschreibung

Die Erfindung betrifft ein Verfahren zum Schwenken der Abteiler von mehrteiligen landwirtschaftlichen Erntemaschinen gemäß dem Oberbegriff des Anspruches 1 und eine landwirtschaftliche Arbeitsmachine gemäß dem Oberbegriff des Anspruches 6.

Aus der DE 41 31 491 ist ein gattungsgleiches mehrteiliges Vorsatzgerät zur Ernte stängeliger Erntegüter bekannt geworden, dessen Seitenteile von einer ausladenden Arbeitsstellung in eine die zulässige Transportbreite einhaltende Transportstellung verschwenkt werden können. In der Arbeitsstellung sind die an den Seitenteilen angeordneten Einzugskanäle zur Erreichung gleicher Einzugskanalbreiten in einer zur Fahrtrichtung geneigten Position angeordnet. Über eine quer zur Fahrtrichtung weisende Schlittenführung im Zusammenwirken mit in Fahrtrichtung weisenden Schwenkachsen werden die Seitenteile in der Transportstellung in eine nahezu vertikale Position verbracht, wobei die verschwenkten Seitenteile dem nicht verschwenkbaren Mittelteil seitlich zugeordnet sind. Eine derartige Anordnung der Seitenteile in der Transportstellung führt zu höheren vom Trägerfahrzeug aufzunehmenden Belastungen, da die Seitenteile in der Transportstellung einen erheblichen Abstand zum Schwerpunkt des Vorsatzgerätes aufweisen. Eine kraftgerechtere Anordnung der verschwenkbaren Seitenteile wäre dann zu erreichen, wenn die Seitenteile in der Transportstellung in vertikaler Richtung über dem nicht verschwenkbaren Seitenteil angeordnet wären. Bei Vorsatzgeräten, deren Einzugskanäle in der Arbeitsstellung schräg zur Fahrtrichtung angeordnet sind, führt dies aber zu dem Problem, dass die äußeren Einzugskanäle der Seitenteile beim Verschwenken in die Transportstellung miteinander kollidieren. Eine solche Kollision kann bei derartig ausgeführten Vorsatzgeräten nur dadurch vermieden werden, dass die verschwenkbaren Seitenteile von so geringer Breite sind, dass sie sich in der Transportstellung nicht berühren können. Dies führt jedoch zu einer Reduzierung der realisierbaren Arbeitsbreite.

Der Erfindung liegt deshalb die Aufgabe zugrunde, ein Verfahren und eine Vorrichtung zum Schwenken mehrteiliger landwirtschaftlicher Vorsatzgeräte von einer ausladenden Arbeitsstellung in wenigstens eine die zulässige Transportbreite einhaltenden Nichtarbeitsposition zu entwickeln, deren Einzugskanäle in der Arbeitsstellung zur Fahrtrichtung geneigt angeordnet sind und die dennoch ein Verschwenken der Seitenteile in eine in vertikaler Richtung über dem wenigstens einen nicht verschwenkbaren Mittelteil liegende Transportstellung ermöglichen, ohne dass die Randbereiche der Seitenteile miteinander kollidieren.

Erfindungsgemäß wird die Aufgabe durch ein Verfahren zum Schwenken der Abteiler mehrteiliger landwirtschaftlicher Erntemaschinen mit den kennzeichnenden Merkmalen des Anspruches 1 und eine landwirtschaftliche Arbeitsmaschine mit den kennzeichnenden Merkmalen des Anspruches 6 gelöst.

Indem beim Verschwenken der Seitenrahmen von einer Arbeitsstellung in zumindest eine Nichtarbeitsstellung wenigstens ein äußerer Abteiler relativ zu dem benachbarten wenigstens einen inneren Abteiler bewegbar ist, wobei sich der Öffnungswinkel zwischen dem äußeren Abteiler und dem benachbarten inneren Abteiler ändert, wird sichergestellt, dass ein Kollidieren der die äußeren Abteiler aufnehmenden Seitenrahmen in einer über dem nicht verschwenkbaren Hauptrahmen liegenden Transportstellung vermieden wird und in der Arbeitsstellung dennoch über der gesamten Arbeitsbreite Einzugskanäle von gleicher Breite realisierbar sind.

Eine vorteilhafte Weiterbildung des erfindungsgemäßen Verfahrens wird dann erreicht, wenn die Änderung des Öffnungswinkels selbsttätig erfolgt, sodass eine den Trägerfahrzeugführer belastende Fremdbetätigung von Verstellorganen entfällt.

Eine besonders kostengünstige Realisierung dieses Verfahrens wird dann erreicht, wenn die Änderung des Öffnungswinkels passiv erfolgt, sodass kostenintensive, aktiv angetriebene Stellorgane wie Hubzylinder oder dergleichen entfallen können.

Damit die in der Arbeitsstellung seitlich ausladend angeordneten äußeren Abteiler der Seitenrahmen in der Transportstellung in eine Position gelangen, in der sie innerhalb der jeweiligen Seitenrahmen angeordnet sind, nimmt der Öffnungswinkel zwischen dem jeweiligen äußeren Abteiler und dem ihm zugeordneten inneren Abteiler beim Verschwenken in die Transportstellung ab.

Eine konstruktiv besonders einfache Umsetzung des erfindungsgemäßen Verfahrens wird dann erreicht, wenn den äußeren Abteilern der Seitenrahmen jeweils eine Verstelleinrichtung zugeordnet ist, die beim Verschwenken der Seitenrahmen von der Arbeits- in die Nichtarbeitsstellung und umgekehrt die Relativbewegung der äußeren Abteiler zu den benachbarten inneren Abteilern realisiert.

Eine konstruktiv einfache, bauraumsparende und kostengünstige Vorrichtung zur Durchführung des erfindungsgemäßen Verfahrens wird dann erreicht, wenn die Verstelleinrichtung zweiteilig ausgeführt ist, wobei die Verstelleinheiten über wenigstens eine vertikale und eine horizontale Schwenkachse miteinander verbunden sind und ein diese Verstelleinheiten verbindendes Koppelelement die Schwenkbewegung des äußeren Abteilers relativ zu dem ihm benachbarten inneren Abteiler steuert.

Auf konstruktiv einfache Weise kann die Steuerung dieser Relativbewegung dadurch erreicht werden, dass wenigstens eine der Verstelleinheiten ein von einem Kulissengang durchbrochenes Formstück aufnimmt, wobei das Koppelelement innerhalb dieses Kulissengangs geführt wird und dabei sowohl eine Horizontal- als auch Vertikalbewegung des oder der äußeren Abteiler erzwingt.

Damit die Änderung des Öffhungswinkels beim Verschwenken der Seitenrahmen auf einen definierten, d. h. einen notwendigen Bereich beschränkt bleibt, ist in einer weiteren vorteilhaften Ausgestaltung der Erfindung die Schwenkbewegung der einen Verstelleinheit um die vertikale Achse durch Anschläge begrenzt.

Eine konstruktiv einfache Ausführung des Koppelelementes wird dann erreicht, wenn das Koppelelement als Führungsstange ausgebildet ist.

Eine Variation des Öffhungswinkels und damit eine Vergrößerung oder eine Reduzierung des Schwenkbereiches der äußeren Abteiler kann im einfachsten Fall dadurch erreicht werden, dass der das Koppelelement führende Kulissengang durch Anschläge absteckbar ist. Zum Anderen kann das den Kulissengang aufnehmende Formstück in unterschiedliche Positionen an der ihm zugeordneten Verstelleinheit verschwenk- und feststellbar sein, sodass sich die Lage des Kulissengangs zu dem mit der anderen Verstelleinheit verbundenen Koppelelement ändert. Unterschiedliche Schwenkbereiche sind vor allem deshalb von besonderer Bedeutung, da unter dem Gesichtspunkt eines geringen Verschleißes nur ein möglichst geringer Schwenkbereich von dem jeweils äußeren Abteiler durchlaufen werden sollte, wobei immer dann, wenn den äußeren Abteilern an sich bekannte Zusatzeinrichtungen zugeordnet werden, ein größerer Schwenkbereich eingestellt werden muss, der dazu führt, dass die äußeren Abteiler dann in der Transportstellung eine näher am benachbarten inneren Abteiler liegende Ruheposition einnehmen.

Um in der Arbeitsposition die Stabilität der äußeren Abteiler zu erhöhen, kann in einer weitern vorteilhaften Ausgestaltung der Erfindung die vertikale Schwenkachse um die die frontseitige Verstelleinheit beim Verschwenken des jeweiligen Seitenrahmens bewegbar ist durch Fixiermittel, die im einfachsten Fall als Schraubverbindungen ausgeführt sind, gesperrt werden.

Um die in das Vorsatzgerät während des Arbeitens auf dem Feld und beim Verschwenken der Seitenrahmen eingeleiteten Stoßbelastungen zu reduzieren, kann sowohl die Schwenkbewegung der frontseitigen Verstelleinheit um die an der rückwärtigen Verstelleinheit angeordnete Schwenkachse als auch die Schwenkbewegung der äußeren Abteiler um die an den Seitenrahmen angeordneten quer zur Fahrtrichtung weisenden Schwenkachse durch geeignete Mittel gedämpft werden.

Weitere vorteilhafte Ausgestaltungen sind Gegenstand weiterer Unteransprüche und werden nachfolgend anhand von Zeichnungen näher erläutert.

Es zeigen
- Figur 1: eine schematische Darstellung der erfindungsgemäßen Erntevorrichtung in Frontansicht
- Figur 2: eine Detailansicht der erfindungsgemäßen Erntevorrichtung in der Draufsicht gemäß Pfeil A in Figur 1
- Figur 3: eine Seitenansicht des erfindungsgemäßen äußeren Abteilers in Schnittdarstellung
- Figur 4: eine Detailansicht des erfindungsgemäßen äußeren Abteilers nach Figur 3
- Figur 5: eine Detailansicht des erfindungsgemäßen Formstücks nach Pfeil B in Figur 3.

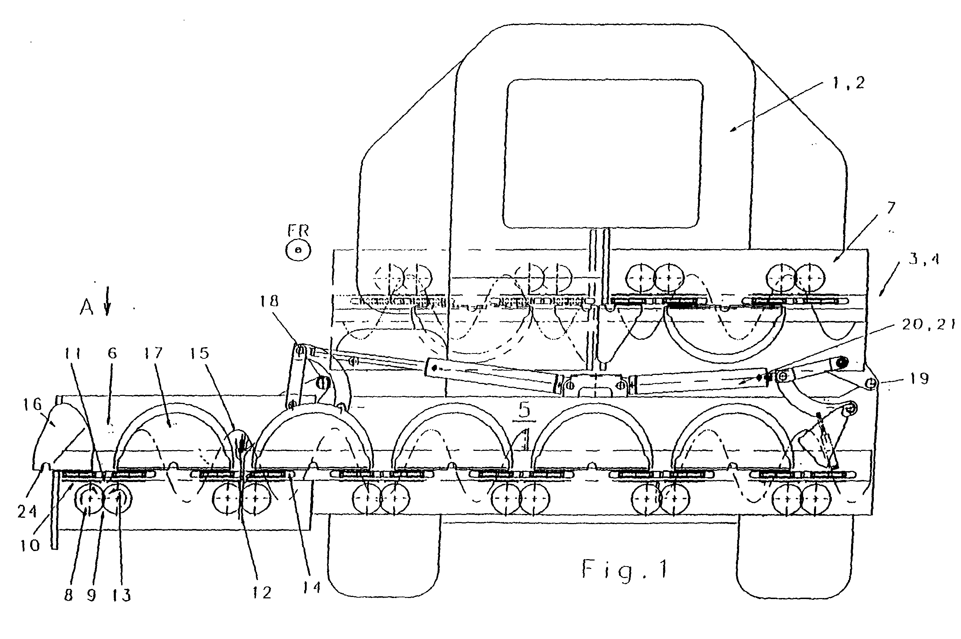

Figur 1 zeigt ein als Mähdrescher 1 ausgeführtes Trägerfahrzeug 2, dem in seinem frontseitigen Bereich ein als Pflücker 3 ausgeführter Erntevorsatz 4 zugeordnet ist. Der Erntevorsatz 4 wird von einem mit dem Trägerfahrzeug 2 verbundenen Hauptrahmen 5 und diesem beidseitig zugeordneten, von einer bodennahen Arbeitsstellung in wenigstens eine bodenferne Nichtarbeitsstellung verschwenkbaren Seitenrahmen 6, 7 gebildet. Dem Hauptrahmen 5 und den Seitenrahmen 6, 7 sind bodenseitig paarweise zusammenarbeitende als Pflückwalzen 8 ausgeführte Arbeitsorgane 9 zugeordnet, die obenseitig von Pflückplatten 10 begrenzt werden, die zwischen sich und im Überlappungsbereich der Arbeitsorgane 9 einen Pflückspalt 11 ausbilden. Wird ein Erntegutstängel 12 von den paarweise zusammenarbeitenden Pflückwalzen 8 erfaßt, ziehen diese aufgrund ihrer Drehbewegung gemäß Pfeil 13 den Erntegutstängel 12 durch den Pflückspalt 11, wobei dessen Fruchtstände an den Pflückspaltplatten 10 abgestriffen werden. Oberhalb des Pflückspaltes 11 sind den Pflückwalzen 8 Förderketten 14 zugeordnet, die die abgestriffenen Fruchtstände in den rückwärtigen Bereich des Pflückers 3 fördern, in welchem sie von einem Querförderorgan 15 mittig zusammengeführt und an das Trägerfahrzeug 2 übergeben werden. Damit die Erntegutstängel 12 sicher in den Bereich des Pflückspaltes 11 gelangen, sind den als Pflückwalzen 8 ausgeführten Arbeitsorganen 9 oberhalb der Förderketten 14 haubenförmige innere Abteiler 17 zugeordnet, die zudem aufgrund ihrer haubenförmigen Gestalt dafür sorgen, dass sich während des Durchzugsprozesses von den Erntegutstängeln 12 lösende Fruchtstände sicher in den Bereich der Förderketten 14 gelangen. Jedem der Seitenrahmen 6, 7 sind in seinem äußeren Bereich äußere Abteiler 16 zugeordnet, die nur in ihrem nach innen weisenden Bereich haubenförmig ausgebildet und insgesamt erheblich schmaler als die inneren Abteiler 17 sind.

Damit der Erntevorsatz 4 von einer ausladenden Arbeitsstellung in eine schmale Transportstellung verbracht werden kann, sind die Seitenrahmen 6, 7 um in Fahrtrichtung FR weisende Achsen 18, 19 schwenkbar am Hauptrahmen 5 angeordnet, wobei die Schwenkbewegung durch im einfachsten Fall als Hubzylinder 21 ausgeführte Stellmittel 20 realisiert wird, die zwischen dem Hauptrahmen 5 und dem jeweiligen Seitenrahmen 6, 7 zwischengeschaltet sind.

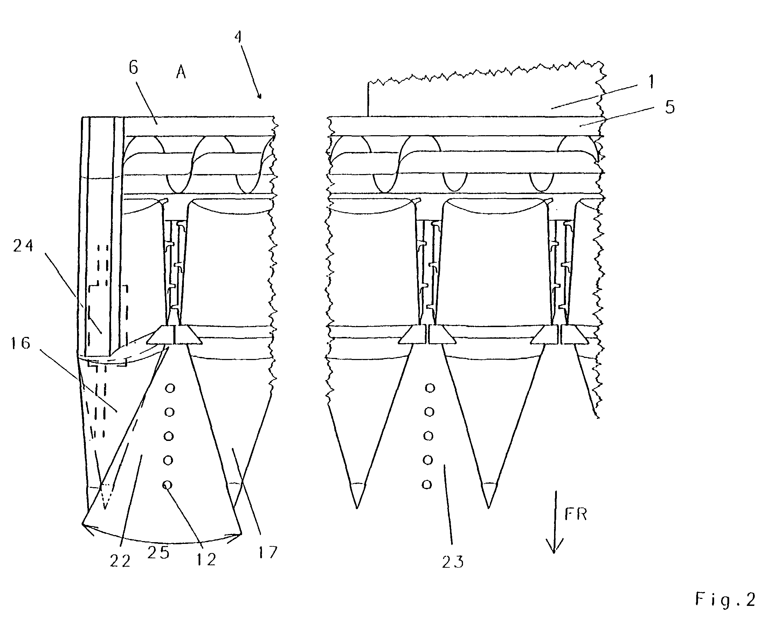

Aufgrund dessen, dass die äußeren Abteiler 16 nur einseitig einem Pflückspalt 11 zugeordnet sind, wobei ihre dem Pflückspalt 11 abgewandte Seite durch den jeweiligen Seitenrahmen 6, 7 begrenzt wird, ergäbe sich gemäß den Figuren 1 und 2 zwischen jedem äußeren Abteiler 16 und dem ihm benachbarten inneren Abteiler 17 ein Einzugskanal 22 (gestrichelte Darstellung in Fig. 2), dessen Breite geringer als die Breite der Einzugskanäle 23 zwischen benachbarten inneren Abteilern 17 ist. Dies würde im Bereich der äußeren Einzugskanäle 22 zu einer Verschlechterung der Stängelführung durch die äußeren Abteiler 16 führen, da diese mit geringerem Abstand zu den Erntegutstängeln 12 angeordnet wären, sodass bereits geringe Fahrtrichtungsänderungen eine verschleißfördernde und Kolbenverluste begünstigende Kollision zwischen Erntegutstängeln 12 und äußerem Abteiler 16 hervorrufen.

Um diesen Nachteil zu vermeiden, ist jedem der äußeren Abteiler 16 eine noch näher zu beschreibende erfindungsgemäße Verstelleinrichtung 24 zugeordnet, die in der Arbeitsstellung dafür sorgt, dass der jeweils äußere Abteiler 16 eine nach außen weisende Lage gemäß Figur 2 (ausgezogene Darstellung) einnimmt, sodass auch der Einzugskanal 22 zwischen diesem äußeren Abteiler 16 und dem ihm benachbarten inneren Abteiler 17 in der Größe den Einzugskanälen 23 zwischen benachbarten inneren Abteilern 17 entspricht. Da nun in der Arbeitsstellung gemäß Figur 1 die äußeren Abteiler 16 über den jeweiligen Seitenrahmen 6, 7 hinausragen, würde dies beim Verschwenken der Seitenrahmen 6, 7 in die kompakteste Transportstellung, in der die Seitenrahmen 6, 7 mit geringem Abstand zueinander oberhalb des Hauptrahmens 5 angeordnet sind, zu einer Kollision der äußeren Abteiler 16 der Seitenrahmen 6, 7 führen. Um dies zu vermeiden, ist jedem der äußeren Abteiler 16 eine Verstelleinrichtung 24 zugeordnet, die in erfindungsgemäßer Weise dafür sorgt, dass beim Verschwenken der Seitenrahmen 6, 7 von der Arbeitsstellung in die wenigstens eine Nichtarbeitsstellung der äußere Abteiler 16 relativ zu dem ihm benachbarten inneren Abteiler 17 bewegt wird, wobei sich der Öffnungswinkel 25 des äußeren Einzugskanals 22 verringert, sodass jeder äußere Abteiler 16 in der Transportstellung gemäß Figur 1 eine in Fahrtrichtung FR weisende Lage einnimmt und die äußeren Abteiler 16 der Seitenrahmen 6, 7 kollisionsfrei einander benachbart angeordnet sind. In analoger Weise sorgt die erfindungsgemäße Verstelleinrichtung 24 beim Verschwenken der Seitenrahmen 6, 7 von der Transportstellung in die Arbeitsstellung dafür, dass die äußeren Abteiler 16 von ihrer in Fahrtrichtung weisenden Transportposition in eine schräg zur Fahrtrichtung und nach außen orientierte Arbeitsposition gelangen, wobei sich der Öffnungswinkel 25 zwischen dem äußeren Abteiler 16 und dem ihm benachbarten inneren Abteiler 17 wieder vergrößert.

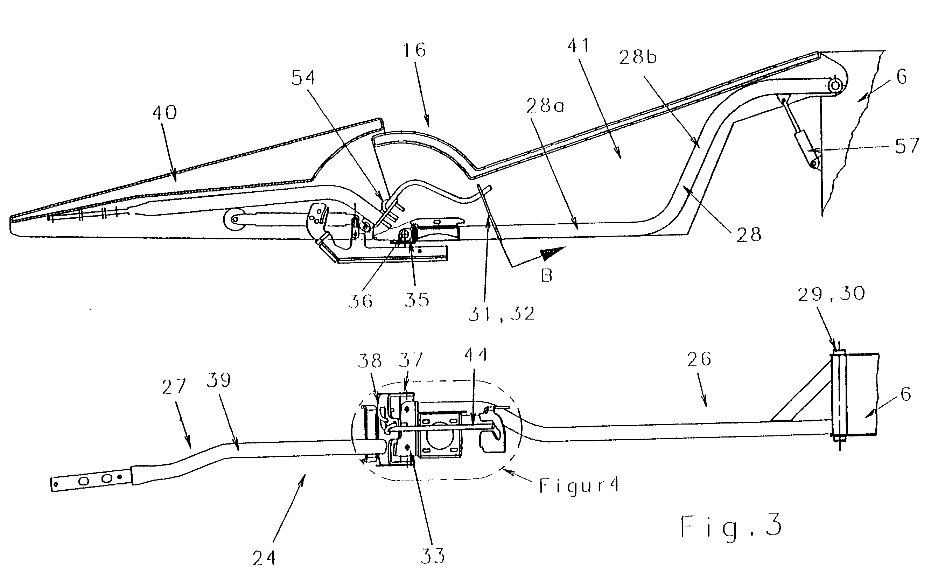

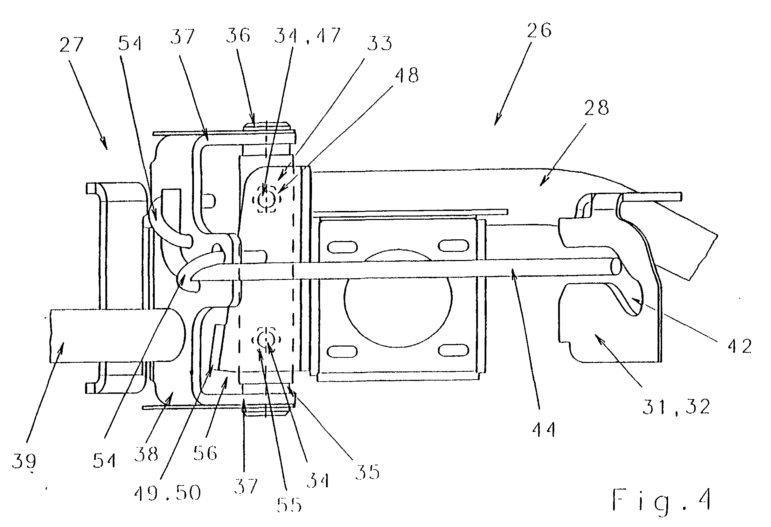

Die Figuren 3 und 4 zeigen eine zur Durchführung des erfindungsgemäßen Verfahrens geeignete Verstelleinrichtung 24, die von einer rückwärtigen Verstelleinheit 26 und einer mit dieser rückwärtigen Verstelleinheit 26 über ein Koppelelement 44 in Wirkverbindungen stehenden frontseitigen Verstelleinheit 27 gebildet wird. Die rückwärtige Verstelleinheit 26 wird von einem rohrförmigen, einen sich in Fahrtrichtung FR erstreckenden Bereich 28a und einen sich daran anschließenden nahezu vertikal erstreckenden Bereich 28b aufweisenden Tragrahmen 28 gebildet, . der trägerfahrzeugseitig über eine quer zur Fahrtrichtung FR weisende Achse 29 schwenkbar an dem jeweiligen Seitenrahmen 6, 7 angeordnet ist, wobei die Schwenkachse 29 im einfachsten Fall durch einen in an sich bekannter Weise axial gesicherten Bolzen 30 gebildet wird. Der sich in Fahrtrichtung FR erstreckende Bereich 28a des Tragrahmens 28 nimmt frontseitig ein sich in vertikaler Richtung erstreckendes als Formblech 31 ausgeführtes Formstück 32 drehfest auf, wobei die Drehfestigkeit im einfachsten Fall dadurch erreicht wird, dass das Formstück 32 mit dem Tragrahmen 28 verschweißt ist. An seinem frontseitigen Ende ist der Tragrahmen 28 mit einem von zwei zueinander beabstandeten Bohrungen 34 durchsetzten und sich quer zur Fahrtrichtung FR erstreckenden Winkelprofil 33 verschweißt. Durch das Winkelprofil 33 wird ein Kastenprofil 35 hindurchgeführt, welches in seinem Inneren eine Schwenkachse 36 aufnimmt, die beidseitig über das Kastenprofil 35 hinausragt.

Das die Schwenkachse 36 aufnehmende Kastenprofil 35 wird beidseitig von den Halteflanschen 37 des die frontseitige Verstelleinheit 27 bildenden Sockelrahmens 38 umgriffen, wobei die Schwenkachse 36 ebenfalls die Halteflansche 37 durchsetzt, sodass der Sockelrahmen 38 um Achse 36 quer zur Fahrtrichtung FR schwenkbar an der rückwärtigen Verstelleinheit 26 angeordnet ist. Obenseitig verfügt der Sockelrahmen 38 über einen in Fahrtrichtung weisenden Haltearm 39 zur Abstützung des äußeren Abteilers 16, wobei der äußere Abteiler 16 im beschriebenen Ausführungsbeispiel aus einer fronseitigen Abteilerhaube 40 und einer rückwärtigen Abteilerhaube 41 besteht, die in nicht näher dargestellter Weise gelenkig miteinander verbunden sind, wobei die rückwärtige Abteilerhaube 41 auf dem Tragrahmen 28 der rückwärtigen Verstelleinheit 26 und die frontseitige Abteilerhaube 40 auf dem Haltearm 39 der fronseitigen Verstelleinheit 27 abgestützt wird.

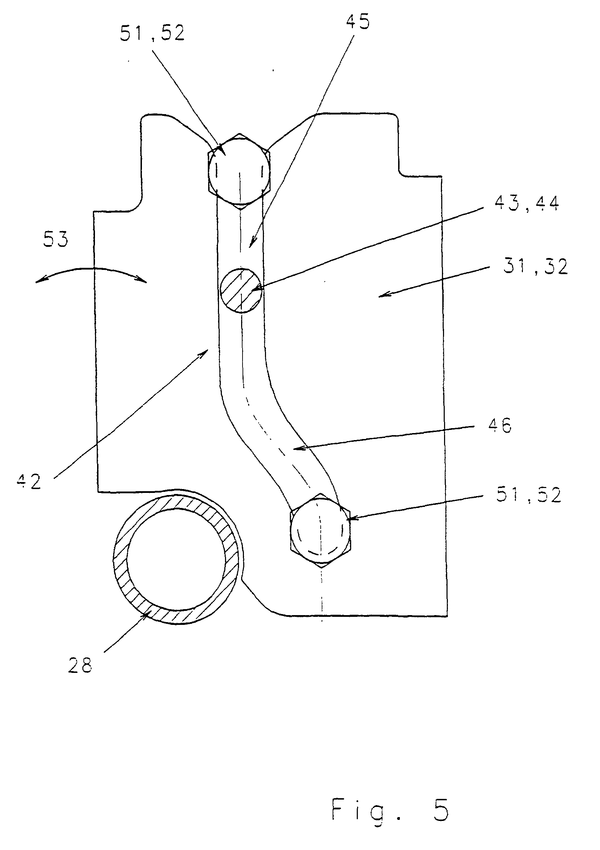

Zur erfindungsgemäßen Koppelung der beiden Verstelleinheiten 26, 27 der Verstelleinrichtung 24 ist das Formstück 32 entsprechend Figur 5 von einem Kulissengang 42 durchbrochen, der einen sich in vertikaler Richtung erstreckenden Bereich 45 und wenigstens einen quer hierzu angeordneten Bereich 46 aufweist. Zudem wird der Kulissengang 42 von dem als Führungsstange 43 ausgeführten Koppelelement 44 durchsetzt, welches anderenends drehfest mit dem Sockelrahmen 38 der fronseitigen Verstelleinrichtung 27 verbunden ist. Damit die Führungsstange 43 beim Verschwenken der Seitenrahmen 6, 7 dem krummlinigen Kulissengang 42 folgen kann, ist die quer zur Fahrtrichtung FR verlaufende Schwenkachse 36 um wenigstens eine vertikale Schwenkachse 47 in dem Winkelprofil 33 des Tragrahmens 28 der rückwärtigen Verstelleinheit 26 gelagert. Auf diese Weise wird erreicht, dass die fronseitige Verstelleinheit 27 sowohl um eine horizontale Schwenkachse 36 als auch um eine vertikale Schwenkachse 47 verschwenkbar mit der rückwärtigen Verstelleinheit 26 verbunden ist, wobei das in dem Kulissengang 42 geführte Koppelelement 44 dafür sorgt, dass zumindest die frontseitige Abteilerhaube 40 der äußeren Abteiler 16 beim Verschwenken der Seitenrahmen 6, 7 von der Arbeitsstellung in eine Nichtarbeitsstellung von einer zur Fahrtrichtung FR geneigten Arbeitsposition in eine in Fahrtrichtung FR weisende Nichtarbeitsposition bewegt wird (Figur 1). Auf besonders einfache Weise kann diese Schwenkbewegung des äußeren Abteilers 16 dann erreicht werden, wenn der vertikale Bereich 45 und der hierzu quer verlaufende Bereich 46 des Kulissengangs 42 so geformt sind, dass der äußere Abteiler 16 selbsttätig beim Verschwenken der Seitenrahmen 6, 7 die erfindungsgemäße Relativbewegung zu dem ihm benachbarten inneren Abteiler 17 ausführt. Aufgrund dessen, dass die Seitenrahmen 6, 7 über die Senkrechte hinaus in die wenigstens eine Transportstellung verschwenkt werden, kann die erfindungsgemäß selbsttätig ablaufende Relativbewegung zwischen dem äußeren Abteiler 16 und dem ihm benachbarten inneren Abteiler 17 allein durch Schwerkraftwirkung erzielt werden. Dabei erfolgt zuerst ein Verschwenken der frontseitigen Verstelleinheit 27 um die horizontale Schwenkachse 36, wobei sich das Koppelelement 44 entlag des Kulissengangs 42 bewegt und in Abhängigkeit von der Form 45, 46 des Kulissengangs 42 die Schwenkbewegung der fronseitigen Verstelleinheit 27 um die wenigstens eine vertikale Schwenkachse 47 quer zur Fahrtrichtung FR erzwingt. Es liegt im Rahmen der Erfindung, dass das erfindungsgemäße Verschwenken der äußeren Abteiler 16 auch in nicht dargestellter Weise aktiv durch beispielsweise separate Hubzylinder erfolgen kann.

Im einfachsten Fall wird die vertikale Schwenkachse 47 durch eine Schraubverbindung 48 gebildet. Um die Schwenkbewegung der fronseitigen Verstelleinheit 27 um die vertikale Schwenkachse 47 zu begrenzen, können dem Winkelprofil 33 Anschläge 49 zugeordnet sein, die die Schwenkbewegung des Kastenprofils 35 innerhalb des Winkelprofils 33 begrenzen. Im einfachsten Fall sind diese Anschläge 49 durch in vertikaler Richtung verlaufende Begrenzungsbleche 50 bildbar.

Um die Relativbewegung zwischen der frontseitigen Verstelleinheit 27 und der rückwärtigen Verstelleinheit 26 der Verstelleinrichtung 24 an verschiedene Öffnungswinkel 25 anpassen zu können, kann in einer weiteren erfindungsgemäßen Ausführungsform der Kulissengang 42 durch Anschläge 51 begrenzt sein, sodass der von der Führungsstange 43 im Kulissengang 42 zurücklegbare Weg verändert werden kann. Eine besonders einfache konstruktive Ausführung ergibt sich dann, wenn die Anschläge 51 als Schraubverbindungen 52 ausgeführt sind, die innerhalb des Kulissengangs 42 an beliebiger Stelle fixierbar sind. Andererseits kann die Anpassung des Öffnungswinkels 25 auch dadurch erreicht werden, dass das von dem Kulissengang 42 durchbrochene Formblech 31 gemäß Pfeilrichtung 53 (Figur 5) um den rohrförmigen Tragrahmen 28 in verschiedene Positionen verschwenk- und feststellbar ist, sodass sich die Lage des Kulissengangs 42 zu der mit der frontseitigen Verstelleinheit 27 verbundenen Führungsstange 43 ändert, wobei Anschläge 51, 52 innerhalb des Kulissengangs 42 entfallen können. Bei einer derartigen Ausgestaltung der erfindungsgemäßen Verstelleinrichtung 24 ist die Führungsstange 43 gemäß Figur 3 und 4 mittels Spannschrauben 54 lösbar am Sockelrahmen 38 der fronseitigen Verstelleinheit 27 angebracht.

In einer weiteren vorteilhaften Ausgestaltung der Erfindung kann die Schwenkbewegung der frontseitigen Verstelleinheit 27 um die vertikale Schwenkachse 47 dadurch gesperrt werden, dass die zweite Bohrung 34 des Winkelprofils 33 ebenfalls von einer Schraubverbindung 55 durchsetzt wird.

In nicht näher dargestellter Weise können zwischen dem Winkelprofil 33 und dem dieses Winkelprofil 33 durchsetzende Kastenprofil 35 Dämpfüngselemente 56 zwischengeschaltet sein, sodass die Schwenkbewegung der frontseitigen Verstelleinheit 27 um die wenigstens eine vertikale Schwenkachse 47 gedämpft wird.

Dem Tragrahmen 28 der rückwärtigen Verstelleinheit 26 kann zudem ein Dämpfüngselement 57 zugeordnet sein (Fig. 3), welches anderenends gelenkig am jeweiligen Seitenrahmen 6, 7 befestigt ist, sodass ebenfalls die Schwenkbewegung des äußeren Abteilers 16 um die am Seitenrahmen 6, 7 angeordnete Schwenkachse 29, 30 Stoßbelastungen minimierend gedämpft wird.

Es liegt im Rahmen der Erfindung, dass das beschriebene Verfahren und die zur Durchführung des Verfahrens geeignete Vorrichtung nicht auf Pflücker 3 gemäß dem dargestellten Ausführungsbeispiel beschränkt sind sondern an beliebigen landwirtschaftlichen Arbeitsmaschinen einsetzbar sind, um die beschriebenen Effekte zu erzielen.

### Bezugszeichenliste

- 1: Mähdrescher
- 2: Trägerfahrzeug
- 3: Pflücker
- 4: Erntevorsatz
- 5: Hauptrahmen
- 6: Seitenrahmen
- 7: Seitenrahmen
- 8: Pflückwalze
- 9: Arbeitsorgan
- 10: Pflückplatte
- 11: Pflückspalt
- 12: Erntegutstängel
- 13: Pfeilrichtung
- 14: Förderkette
- 15: Querförderorgan
- 16: äußerer Abteiler
- 17: innerer Abteiler
- 18: Schwenkachse
- 19: Schwenkachse
- 20: Stellmittel
- 21: Hubzylinder
- 22: äußerer Einzugskanal
- 23: innerer Einzugskanal
- 24: Verstelleinrichtung
- 25: Öffnungswinkel
- 26: rückwärtige Verstelleinheit
- 27: frontseitige Verstelleinheit
- 28: Tragrahmen
- 28a: horizontaler Bereich des Tragrahmens
- 28b: vertikaler Bereich des Tragrahmens
- 29: Schwenkachse
- 30: Bolzen
- 31: Formblech
- 32: Formstück
- 33: Winkelprofil
- 34: Bohrung
- 35: Kastenprofil
- 36: Schwenkachse
- 37: Halteflansch
- 38: Sockelrahmen
- 39: Haltearm
- 40: frontseitige Abteilerhaube
- 41: rückwärtige Abteilerhaube
- 42: Kulissengang
- 43: Führungsstange
- 44: Koppelelement
- 45: vertikaler Bereich des Kulissengangs
- 46: Querbereich des Kulissengangs
- 47: vertikale Schwenkachse
- 48: Schraubverbindung
- 49: Anschläge
- 50: Begrenzungsblech
- 51: Anschläge im Kulissengang
- 52: Schraubverbindung
- 53: Pfeilrichtung
- 54: Spannschraube
- 55: Schraubverbindung
- 56: Dämpfungselement
- 57: Dämpfungselement

- FR: Fahrtrichtung

## Patentansprüche

1. Verfahren zum Schwenken der Abteiler einer landwirtschaftlichen Arbeitsmaschine für in Reihen stehendes Erntegut mit einem mehrteiligen Rahmen mit von wenigstens einer Arbeits- in mindestens eine Nichtarbeitsstellung schwenkbaren Seitenrahmen, wobei die Seitenrahmen zumindest einen äußeren Abteiler und wenigstens einen diesem äußeren Abteiler benachbarten inneren Abteiler aufweisen,
**dadurch gekennzeichnet,**
**dass** beim Verschwenken der Seitenrahmen (6, 7) von einer Arbeitsstellung in zumindest eine Nichtarbeitsstellung oder umgekehrt wenigsten ein äußerer Abteiler (16) relativ zu dem benachbarten wenigsten einen inneren Abteiler (17) bewegt wird, wobei sich der Öffnungswinkel (25) zwischen dem äußeren Abteiler (16) und dem benachbarten inneren Abteiler (17) ändert.

2. Verfahren nach Anspruch 1,
dass die Änderung des Öffnungswinkels (25) zwischen dem äußeren Abteiler (16) und dem wenigstens einen inneren Abteiler (17) selbsttätig erfolgt.

3. Verfahren nach einem oder mehreren der vorhergehenden Ansprüche,
dass die Änderung des Öffnungswinkels (25) zwischen dem äußeren Abteiler (16) und dem wenigstens einen inneren Abteiler (17) passiv erfolgt.

4. Verfahren nach einem oder mehreren der vorhergehenden Ansprüche,
**dadurch gekennzeichnet,**
**dass** die Bewegung der äußeren Abteiler (16) relativ zu den ihnen benachbarten inneren Abteilern (17) durch einen oder mehrere Anschläge (49) begrenzbar ist.

5. Verfahren nach einem oder mehreren der vorhergehenden Ansprüche,
**dadurch gekennzeichnet,**
**dass** der Öffnungswinkel (25) zwischen den äußeren Abteilern (16) und dem wenigstens einen inneren Abteiler (17) beim Schwenken aus einer Arbeits- in eine Nichtarbeitsstellung kleiner wird.

6. Landwirtschaftliche Arbeitsmaschine mit einer Vorrichtung zum Schwenken der Abteiler einer landwirtschaftlichen Arbeitsmaschine für in Reihen stehendes Erntegut mit einem mehrteiligen Rahmen mit von wenigstens einer Arbeits- in mindestens eine Nichtarbeitsstellung schwenkbaren Seitenrahmen, wobei die Seitenrahmen zumindest einen äußeren Abteiler und wenigstens einen diesem äußeren Abteiler benachbarten inneren Abteiler aufweisen, **dadurch gekennzeichnet, dass** jedem der äußeren Abteiler (16) eine Verstelleinrichtung (24) zugeordnet ist, die dafür sorgt, dass beim Verschwenken der Seitenrahmen (6,7) von der Arbeitsstellung in die wenigstens eine Nichtarbeitsstellung der äußere Abteiler (16) relativ zu dem ihm benachbarten inneren Abteiler (17) bewegt wird, wobei sich der Öffnungswinkel (25) des äußeren Einzugskanals (22) verringert, sodass jeder äußere Abteiler (16) in der Transportstellung eine in Fahrtrichtung (FR) weisende Lage einnimmt und die äußeren Abteiler (16) der Seitenrahmen (6,7) kollisionsfrei einander benachbart angeordnet sind, und wobei in analoger Weise die Verstelleinrichtung (24) beim Verschwenken der Seitenrahmen (6,7) von der Transportstellung in die Arbeitsstellung dafür sorgt, dass die äußeren Abteiler (16) von ihrer in Fahrtrichtung (FR) weisenden Transportposition in eine schräg zur Fahrtrichtung und nach außen orientierte Arbeitsposition gelangen, wobei sich der Öffnungswinkel (25) zwischen dem äußeren Abteiler (16) und dem ihm benachbarten inneren Abteiler (17) wieder vergrößert.

7. Landwirtschaftliche Arbeitsmaschine nach Anspruch 6,
**dadurch gekennzeichnet,**
**dass** die Verstelleinrichtung (24) von einer in Fahrtrichtung FR vorn liegenden frontseitigen Verstelleinheit (27) und einer rückwärtigen Verstelleinheit (26) gebildet wird, wobei die rückwärtige Verstelleinheit (26) in Wirkverbindung mit dem jeweiligen Seitenrahmen (6, 7) steht und die frontseitige Verstelleinheit (27) um wenigstens eine vertikale Schwenkachse (47) und zumindest eine horizontale Schwenkachse (36) schwenkbeweglich mit der rückwärtigen Verstelleinheit (26) gekoppelt ist und ein die frontseitige Verstelleinheit (27) mit der rückwärtigen Verstelleinheit (26) verbindendes Koppelelement (44) die Schwenkbewegung des äußeren Abteilers (16) steuert.

8. Landwirtschaftliche Arbeitsmaschine nach einem oder mehreren der Ansprüche 6-7,
**dadurch gekennzeichnet,**
**dass** die rückwärtige Verstelleinheit (26) wenigstens ein Formstück (32) drehfest aufnimmt, wobei das Formstück (32) wenigstens teilweise von dem Koppelelement (44) durchsetzt wird.

9. Landwirtschaftliche Arbeitsmaschine nach Anspruch 8,
**dadurch gekennzeichnet,**
**dass** das Formstück (32) als Formblech (31) ausgeführt ist und von einem Kulissengang (42) durchbrochen wird, wobei das Koppelelement (44) in dem Kulissengang (42) geführt wird.

10. Landwirtschaftliche Arbeitsmaschine nach einem oder mehreren der Ansprüche 6 - 9,
**dadurch gekennzeichnet,**
**dass** die Schwenkbewegung der frontseitigen Verstelleinheit (27) um die vertikale Schwenkachse (47) durch Anschläge (49, 50) begrenzt wird.

11. Landwirtschaftliche Arbeitsmaschine nach einem oder mehreren der vorhergehenden Ansprüche 6 - 10,
**dadurch gekennzeichnet,**
**dass** das Formstück (32) im Zusammenwirken mit der wenigstens einen vertikalen Schwenkachse (47) und der wenigstens einen horizontalen Schwenkachse (36) sowohl eine Horizontal- als auch eine Vertikalbewegung des Koppelelementes (44) zulässt.

12. Landwirtschaftliche Arbeitsmaschine nach einem oder mehreren der vorhergehenden Ansprüche 6 - 11
**dadurch gekennzeichnet,**
**dass** das Koppelelement (44) als Führungsstange (43) ausgebildet ist.

13. Landwirtschaftliche Arbeitsmaschine nach einem oder mehreren der vorhergehenden Ansprüche 6 - 12,
**dadurch gekennzeichnet,**
**dass** das Formstück (32) drehfest mit der rückwärtigen Verstelleinheit (26) verbunden ist und der Kulissengang (42) durch Anschläge (51,52) begrenzbar ist.

14. Landwirtschaftliche Arbeitsmaschine nach einem oder mehreren der vorhergehenden Ansprüche 6 - 13,
**dadurch gekennzeichnet,**
**dass** das Formstück (32) in verschiedenen Positionen ein- und feststellbar mit der rückwärtigen Verstelleinheit (26) verbunden ist.

15. Landwirtschaftliche Arbeitsmaschine nach einem oder mehreren der vorhergehenden Ansprüche 6 - 14,
**dadurch gekennzeichnet,**
**dass** die vertikale Schwenkachse (47) festlegbar ist.

16. Landwirtschaftliche Arbeitsmaschine nach einem oder mehreren der vorhergehenden Ansprüche 6 - 15,
**dadurch gekennzeichnet,**
**dass** die Schwenkbewegung der frontseitigen Verstelleinheit (27) um die vertikale Schwenkachse (47) gedämpft werden kann.

17. Landwirtschaftliche Arbeitsmaschine nach einem oder mehreren der vorhergehenden Ansprüche 6 - 16,
**dadurch gekennzeichnet,**
**dass** die Verstelleinrichtung (24) um eine quer zur Fahrtrichtung FR weisende Achse (29) schwenkbar an dem jeweiligen Seitenrahmen (6, 7) angeordnet ist und die Schwenkbewegung um die quer zur Fahrtrichtung FR weisende Achse (29) gedämpft werden kann.

18. Landwirtschaftliche Arbeitsmaschine nach Anspruch 6,
**dadurch gekennzeichnet,**
**dass** das Stellmittel (20) zum Verschwenken des jeweiligen Seitenrahmens (6, 7) als Hubzylinder (21) ausgeführt ist.

## Claims

1. A method of pivoting the dividers of an agricultural working machine for crop material standing in rows comprising a multi-part frame with side frames which are pivotable from at least one working position into at least one non-working position, wherein the side frames have at least one outer divider and at least one inner divider adjacent to said outer divider,
**characterised in that** in the pivotal movement of the side frames (6, 7) from a working position into at least one non-working position or vice-versa at least one outer divider (16) is moved relative to the adjacent at least one inner divider (17), wherein the opening angle (25) between the outer divider (16) and the adjacent inner divider (17) changes.

2. A method according to claim 1 **characterised in that** the change in the opening angle (25) between the outer divider (16) and the at least one inner divider (17) takes place automatically.

3. A method according to one or more of the preceding claims **characterised in that** the change in the opening angle (25) between the outer divider (16) and the at least one inner divider (17) takes place passively.

4. A method according to one or more of the preceding claims **characterised in that** the movement of the outer dividers (16) relative to the inner dividers (17) adjacent thereto can be limited by one or more abutments (49).

5. A method according to one or more of the preceding claims **characterised in that** the opening angle (25) between the outer dividers (16) and the at least one inner divider (17) becomes smaller in the pivotal movement out of a working position into a non-working position.

6. An agricultural working machine comprising an apparatus for pivoting the dividers of an agricultural working machine for crop material standing in rows comprising a multi-part frame with side frames which are pivotable from at least one working position into at least one non-working position, wherein the side frames have at least one outer divider and at least one inner divider adjacent to said outer divider, **characterised in that** associated with each of the outer dividers (16) is an adjusting device (24) which provides that in the pivotal movement of the side frames (6, 7) from the working position into the at least one non-working position the outer divider (16) is moved relative to the inner divider (17) adjacent thereto, wherein the opening angle (25) of the outer intake passage (22) decreases so that each outer divider (16) in the transport condition assumes a position of facing in the direction of travel (FR) and the outer dividers (16) of the side frames (6, 7) are arranged in mutually adjacent collision-free relationship, and wherein in a similar manner the adjusting device (26) in the pivotal movement of the side frames (6) from the transport condition into the working position provides that the outer dividers (16) move from their transport position of facing in the direction of travel (FR) into a working position of being oriented inclinedly relative to the direction of travel and outwardly, wherein the opening angle (25) between the outer divider (16) and the inner divider (17) adjacent thereto increases again.

7. An agricultural working machine according to claim 6 **characterised in that** the adjusting device (24) is formed by a front adjusting unit (27) which is at the front in the direction of travel FR and a rearward adjusting unit (26), wherein the rearward adjusting unit (26) is operatively connected to the respective side frame (6, 7) and the front adjusting unit (27) is coupled to the rearward adjusting unit (26) pivotably movably about at least one vertical pivot shaft (47) and at least one horizontal pivot shaft (36) and a coupling element (44) connecting the front adjusting unit (27) to the rearward adjusting unit (26) controls the pivotal movement of the outer divider (16).

8. An agricultural working machine according to one or more of claims 6 - 7 **characterised in that** the rearward adjusting unit (26) non-rotatably accommodates at least one shaped portion (32), wherein the shaped portion (32) has the coupling element (44) at least partially passing therethrough.

9. An agricultural working machine according to claim 8 **characterised in that** the shaped portion (32) is in the form of a shaped metal plate (31) and is apertured by a slideway (42), the coupling element (44) being guided in the slideway (42).

10. An agricultural working machine according to one or more of claims 6 - 9 **characterised in that** the pivotal movement of the front adjusting unit (27) about the vertical pivot shaft (47) is limited by abutments (49, 50).

11. An agricultural working machine according to one or more of preceding claims 6 - 10 **characterised in that** the shaped portion (32) in co-operating with the at least one vertical pivot shaft (47) and the at least one horizontal pivot shaft (36) permits both a horizontal movement and also a vertical movement of the coupling element (44).

12. An agricultural working machine according to one or more of preceding claims 6 - 11 **characterised in that** the coupling element (44) is in the form of a guide bar (43).

13. An agricultural working machine according to one or more of preceding claims 6 - 12 **characterised in that** the shaped portion (32) is non-rotatably connected to the rearward adjusting unit (26) and the slideway (42) can be limited by abutments (51, 52).

14. An agricultural working machine according to one or more of preceding claims 6 - 13 **characterised in that** the shaped portion (32) is connected to the rearward adjusting unit (26) in such a way that it can be set to and fixed in various positions.

15. An agricultural working machine according to one or more of preceding claims 6 - 14 **characterised in that** the vertical pivot shaft (47) can be fixed.

16. An agricultural working machine according to one or more of preceding claims 6 - 15 **characterised in that** the pivotal movement of the front adjusting unit (27) about the vertical pivot shaft (47) can be damped.

17. An agricultural working machine according to one or more of preceding claims 6 - 16 **characterised in that** the adjusting device (24) is arranged on the respective side frame (6, 7) pivotably about a shaft (29) facing transversely with respect to the direction of travel FR and the pivotal movement about the shaft (29) facing transversely with respect to the direction of travel FR can be damped.

18. An agricultural working machine according to claim 6 **characterised in that** the adjusting means (20) for pivoting the respective side frame (6, 7) is in the form of a stroke cylinder (21).

## Revendications

1. Procédé pour faire pivoter le séparateur d'une machine agricole pour la récolte de produits formant des rangs, comportant un châssis en plusieurs parties avec des châssis latéraux qui peuvent être amenés par pivotement d'au moins une position de travail dans au moins une position de non-travail, les châssis latéraux présentant au moins un diviseur extérieur et au moins un diviseur intérieur voisin dudit diviseur extérieur, **caractérisé par le fait que** lors du pivotement des châssis latéraux (6, 7) d'une position de travail dans au moins une position de non-travail ou inversement, au moins un diviseur extérieur (16) est déplacé par rapport au diviseur intérieur (17) voisin, au nombre d'au moins un, l'angle d'ouverture (25) entre le diviseur extérieur (16) et le diviseur intérieur (17) voisin étant modifié.

2. Procédé selon la revendication 1, **caractérisé par le fait que** la modification de l'angle d'ouverture (25) entre le diviseur extérieur (16) et le diviseur intérieur (17), au nombre d'au moins un, a lieu de manière automatique.

3. Procédé selon une ou plusieurs des revendications précédentes, **caractérisé par le fait que** la modification de l'angle d'ouverture (25) entre le diviseur extérieur (16) et le diviseur intérieur (17), au nombre d'au moins un, a lieu de manière passive.

4. Procédé selon une ou plusieurs des revendications précédentes, **caractérisé par le fait que** le déplacement des diviseurs extérieurs (16) par rapport aux diviseurs intérieurs (17) voisins est limité par une ou plusieurs butées (49).

5. Procédé selon une ou plusieurs des revendications précédentes, **caractérisé par le fait que** l'angle d'ouverture (25) entre les diviseurs extérieurs (16) et le diviseur intérieur (17) au nombre d'au moins lors du pivotement d'une position de travail dans au moins une position de non-travail diminue.

6. Machine de travail agricole munie d'un dispositif permettant de faire pivoter le diviseur d'une machine de travail agricole pour la récolte de produits formant des rangs, comportant un châssis en plusieurs parties avec des châssis latéraux qui peuvent être amenés par pivotement d'au moins une position de travail dans au moins une position de non-travail, les châssis latéraux présentant au moins un diviseur extérieur et au moins un diviseur intérieur voisin dudit diviseur extérieur, **caractérisé par le fait qu'**à chaque diviseur extérieur (16) est associé un dispositif de manoeuvre (24) qui, lors du pivotement des châssis latéraux (6, 7) de la position de travail dans au moins une position de non-travail ou inversement, déplace le diviseur extérieur (16) par rapport au diviseur intérieur (17) voisin, l'angle d'ouverture (25) du canal d'entrée (22) extérieur diminuant, de telle sorte que chaque diviseur extérieur (16), dans la position de transport, occupe une position orientée dans la direction de déplacement (FR) et que les diviseurs extérieurs (16) des châssis latéraux (6, 7) soient disposés côte à côte sans se toucher, de manière analogue le dispositif de manoeuvre (24), lors du pivotement des châssis latéraux (6, 7) de la position de transport dans la position de travail, amenant les diviseurs extérieurs (16) de leur position de transport orientée dans la direction de déplacement (FR) dans une position de travail orientée vers l'extérieur, l'angle d'ouverture (25) entre le diviseur extérieur (16) et le diviseur (17) intérieur voisin de celui-ci augmentant de nouveau.

7. Machine de travail agricole selon la revendication 6, **caractérisée par le fait que** le dispositif de manoeuvre (24) est formé d'une unité de manoeuvre frontale (27) disposée devant, vu dans la direction de déplacement (FR), et d'une unité de manoeuvre arrière (26), l'unité de manoeuvre arrière (26) étant liée activement au châssis latéral (6, 7) concerné et l'unité de manoeuvre frontale (27) étant couplée à l'unité de manoeuvre arrière (26) avec possibilité de pivotement autour d'au moins un axe de pivotement (47) vertical et d'au moins un axe de pivotement (36) horizontal, un élément de couplage (44) qui relie l'unité de manoeuvre frontale (27) à l'unité de manoeuvre arrière (26) commandant le mouvement de pivotement du séparateur (16) extérieur.

8. Machine de travail agricole selon une ou plusieurs des revendications 6-7 précédentes, **caractérisée par le fait que** l'unité de manoeuvre arrière (26) reçoit de manière fixe en rotation au moins une pièce de forme (32), la pièce de forme (32) étant au moins partiellement traversée par l'élément de couplage (44).

9. Machine de travail agricole selon la revendication 8, **caractérisée par le fait que** la pièce de forme (32) est réalisée en tôle formée (31), l'élément de couplage (44) étant guidé dans la lumière de coulisse (42)

10. Machine de travail agricole selon une ou plusieurs des revendications 6-9 précédentes, **caractérisée par le fait que** le mouvement de pivotement de l'unité de manoeuvre frontale (27) autour de l'axe de pivotement (47) vertical est limité par des butées (49, 50).

11. Machine de travail agricole selon une ou plusieurs des revendications 6-10 précédentes, **caractérisée par le fait que** la pièce de forme (32) dans son interaction avec l'axe de pivotement (47) vertical, au nombre d'au moins un, et l'axe de pivotement (36) horizontal, au nombre d'au moins un, autorise à la fois un déplacement horizontal et un déplacement vertical de l'élément de couplage (44).

12. Machine de travail agricole selon une ou plusieurs des revendications 6-11 précédentes, **caractérisée par le fait que** l'élément de couplage (44) est conformé en tige de guidage (43).

13. Machine de travail agricole selon une ou plusieurs des revendications 6-12 précédentes, **caractérisée par le fait que** la pièce de forme (32) est solidaire en rotation de l'unité de manoeuvre arrière (26) et que la lumière de coulisse (42) peut être limitée par des butées (51, 52).

14. Machine de travail agricole selon une ou plusieurs des revendications 6-13 précédentes, **caractérisée par le fait que** la pièce de forme (32) est liée à l'unité de manoeuvre arrière (26) avec possibilité de réglage et de blocage dans différentes positions.

15. Machine de travail agricole selon une ou plusieurs des revendications 6-12 précédentes, **caractérisée par le fait que** l'angle de pivotement (47) vertical peut être fixé.

16. Machine de travail agricole selon une ou plusieurs des revendications 6-15 précédentes, **caractérisée par le fait que** le mouvement de pivotement de l'unité de manoeuvre frontale (27) autour de l'axe de pivotement (47) vertical peut être amorti.

17. Machine de travail agricole selon une ou plusieurs des revendications 6-16 précédentes, **caractérisée par le fait que** le dispositif de manoeuvre (24) est monté pivotant autour d'un axe (29) orienté transversalement à la direction de déplacement (FR) sur le châssis latéral (6, 7) concerné et le mouvement de pivotement autour de l'axe (29) orienté transversalement à la direction de déplacement (FR) vertical peut être amorti..

18. Machine de travail agricole selon la revendication 6 précédentes, **caractérisée par le fait que** le moyen de manoeuvre (20) pour faire pivoter le châssis latéral (6, 7) concerné est conformé en vérin (21).
